(19) Europäisches Patentamt
European Patent Office
Office européen des brevets

(11) **EP 3 783 046 A1**

(12) **EUROPÄISCHE PATENTANMELDUNG**

(43) Veröffentlichungstag:
**24.02.2021 Patentblatt 2021/08**

(51) Int Cl.:
*C08G 64/30* (2006.01)   *C08G 18/44* (2006.01)
*C08G 65/26* (2006.01)

(21) Anmeldenummer: **19192409.1**

(22) Anmeldetag: **19.08.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR HERSTELLUNG VON POLYETHERCARBONATPOLYOLEN**

(57) Gegenstand der Erfindung ist ein Verfahren zur Herstellung von Polyethercarbonatpolyolen durch Anlagerung von cyclischen Ethylencarbonat an eine H-funktionelle Startersubstanz in Anwesenheit eines Katalysators, dadurch gekennzeichnet, dass

als Katalysator mindestens eine Verbindung gemäß einer der Formeln

$$X[VO_3] \tag{1}$$

$$Y_2[WO_4] \tag{2}$$

oder

$$Y_3[VO_4] \tag{3}$$

mit
X = Alkalimetall, bevorzugt Kalium oder Cäsium
Y = Kalium oder Cäsium
eingesetzt wird.

EP 3 783 046 A1

**Beschreibung**

Die vorliegende Erfindung betrifft ein Verfahren zur Herstellung von Polyethercarbonatpolyolen durch katalytische Anlagerung cyclischen Ethylencarbonats an eine H-funktionelle Startersubstanz.

Es ist bekannt, dass cyclische Carbonate, wie z.B. cyclisches Propylencarbonat, als Monomer in der Herstellung von Polycarbonatpolyolen eingesetzt werden können. Diese Umsetzung basiert auf einer Umesterung und wird in Anwesenheit von Katalysatoren wie beispielsweise Titan-Verbindungen, wie Titandioxid oder Titantetrabutylat (EP 0 343 572), Zinn-Verbindungen, wie Zinndioxid oder Dibutylzinnoxid (DE 2 523 352), oder Alkalimetallcarbonate oder -acetate (DE 1 495 299 A1) durchgeführt. In diesen Verfahren werden jedoch die eingesetzten Carbonate und Alkohole abwechselnd eingebaut und somit alternierende Polycarbonatpolyole erhalten. Diese alternierenden Polycarbonatpolyole enthalten keine Ethergruppen. Zusätzlich besitzen diese Katalysatoren den Nachteil, dass bei den üblichen Reaktionstemperaturen von 150°C bis 230°C Nebenprodukte wie Ethylenglykol oder Propylenglykol gebildet werden. Diese Nebenprodukte sind thermisch schwer abtrennbar und deshalb im Sinne eines wirtschaftlichen Verfahrens nicht wünschenswert.

Ebenfalls offenbart ist der Einsatz von $Na_3VO_4$ und $Na_2WO_4$ als Katalysatoren für die Herstellung von Polyethercarbonatpolyolen durch Anlagerung cyclischen Ethylencarbonats an Monoethylenglykol und Diethylenglykol (R.F. Harris, Journal of Applied Polymer Science, 1989, 37, 183-200).

Die der vorliegenden Erfindung zu Grunde liegende Aufgabe bestand darin, ein Verfahren zur Herstellung von Polyethercarbonatpolyolen mit einem erhöhten Anteil an eingebauten $CO_2$-Gruppen bereitzustellen.

Überraschend wurde gefunden, dass die technische Aufgabe gelöst wird durch ein Verfahren zur Herstellung von Polyethercarbonatpolyolen durch Anlagerung von cyclischen Ethylencarbonat an eine H-funktionelle Startersubstanz in Anwesenheit eines Katalysators, dadurch gekennzeichnet, dass als Katalysator mindestens eine Verbindung gemäß einer der Formeln

$$X[VO_3] \tag{1}$$

$$Y_2[WO_4] \tag{2}$$

oder

$$Y_3[VO_4] \tag{3}$$

mit X = Alkalimetall, bevorzugt Kalium oder Cäsium
Y = Kalium oder Cäsium

eingesetzt wird.

Bei dem Verfahren kann zunächst eine H-funktionelle Startersubstanz und cyclisches Ethylencarbonat im Reaktor vorgelegt werden. Es kann dabei auch nur eine Teilmenge der H-funktionellen Startersubstanz und/oder eine Teilmenge cyclischen Ethylencarbonats im Reaktor vorgelegt werden. Anschließend wird gegebenenfalls die für die ringöffnende Polymerisation benötigte Menge an Katalysator in den Reaktor gegeben. Die Reihenfolge der Zugabe ist dabei nicht entscheidend. Es kann auch erst der Katalysator und anschließend eine H-funktionelle Startersubstanz und cyclisches Ethylencarbonat in den Reaktor gefüllt werden. Alternativ kann auch erst der Katalysator in einer H-funktioneller Startersubstanz suspendiert und anschließend die Suspension in den Reaktor gefüllt werden.

Es ist bevorzugt, dass das molare Verhältnis von H-funktioneller Startersubstanz zu cyclischen Ethylencarbonat im Bereich von mehr als 1: 1 bis 1: 20, besonders bevorzugt 1:2 bis 1:15, insbesondere bevorzugt 1:5 bis 1:10.

Der Katalysator wird vorzugsweise in einer Menge eingesetzt, so dass der Gehalt an Katalysator im resultierenden Reaktionsprodukt 10 bis 50000 ppm, besonders bevorzugt 20 bis 30000 ppm und höchst bevorzugt 50 bis 20000 ppm beträgt.

In einer bevorzugten Ausführungsform wird in das resultierende Gemisch aus (a) einer Teilmenge H-funktioneller Startersubstanz, (b) Katalysator und (c) cyclischen Ethylencarbonats bei einer Temperatur von 20°C bis 120°C, besonders bevorzugt von 40°C bis 100°C Inertgas (beispielsweise Argon oder Stickstoff) eingeleitet.

In einer alternativen bevorzugten Ausführungsform wird das resultierende Gemisch aus (a) einer Teilmenge H-funktioneller Startersubstanz, (b) Katalysator und (c) cyclischen Ethylencarbonats bei einer Temperatur von 20°C bis 120°C, besonders bevorzugt von 40°C bis 100°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), beaufschlagt und jeweils anschließend der Überdruck auf ca. 1 bar (absolut) reduziert.

Der Katalysator kann in fester Form oder als Suspension im cyclischen Ethylencarbonat, in H-funktioneller Startersubstanz oder in einer Mischung aus den genannten zugegeben werden.

In einer weiteren bevorzugten Ausführungsform wird in einem ersten Schritt eine Teilmenge der H-funktionellen Startersubstanzen und cyclisches Ethylencarbonat vorgelegt und in einem anschließenden zweiten Schritt die Temperatur der Teilmenge H-funktioneller Startersubstanz und des cyclischen Ethylencarbonats auf 40°C bis 120°C, bevorzugt 40°C bis 100°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff) angelegt wird und der Katalysator zur Teilmenge H-funktioneller Startersubstanz im ersten Schritt oder unmittelbar anschließend im zweiten Schritt zugesetzt wird.

Das resultierende Reaktionsgemisch wird dann bei einer Temperatur von 130°C bis 230°C, bevorzugt 140°C bis 200°C, besonders bevorzugt 160°C bis 190°C erhitzt, wobei gegebenenfalls ein Inertgas-Strom (beispielsweise von Argon oder Stickstoff) durch den Reaktor geleitet werden kann. Die Reaktion wird solange fortgeführt bis bei der eingestellten Temperatur keine Gasentwicklung mehr beobachtet wird. Die Reaktion kann ebenfalls unter Druck durchgeführt werden, bevorzugt bei einem Druck von 50 mbar bis 100 bar (absolut), besonders bevorzugt 200 mbar bis 50 bar (absolut), insbesondere bevorzugt 500 mbar bis 30 bar (absolut).

Wurde nur eine Teilmenge an H-funktioneller Startersubstanz und/oder eine Teilmenge an cyclischen Ethylencarbonat in den Reaktor vorgelegt, erfolgt die Dosierung der restlichen Menge an H-funktioneller Startersubstanz und/oder cyclischen Ethylencarbonats in den Reaktor kontinuierlich. Es ist möglich, das cyclische Ethylencarbonat mit konstanter Dosierrate zu dosieren oder die Dosierrate allmählich oder schrittweise zu steigern oder zu senken oder das cyclische Ethylencarbonat portionsweise zuzugeben. Bevorzugt wird das cyclische Ethylencarbonat mit konstanter Dosierrate dem Reaktionsgemisch zugegeben. Die Dosierung des cyclischen Ethylencarbonats bzw. der H-funktionellen Startersubstanzen kann simultan oder sequentiell über jeweils separate Dosierungen (Zugaben) erfolgen oder über eine oder mehrere Dosierungen, wobei die H-funktionellen Startersubstanzen einzeln oder als Gemisch dosiert werden kann.

In dem Verfahren kann gegebenenfalls zusätzlich zu dem cyclischen Ethylencarbonat weiteres cyclisches Carbonat in einem Anteil von höchstens 20 Gew.-%, bevorzugt höchstens 10 Gew.-%, besonders bevorzugt höchstens 5 Gew.-%, jeweils bezogen auf die Summe des Gesamtgewichts an eingesetztem cyclischen Carbonat, eingesetzt werden. Als weiteres cyclisches Carbonat wird bevorzugt Propylencarbonat eingesetzt. Es ist jedoch ganz besonders bevorzugt, dass nur cyclisches Ethylencarbonat eingesetzt wird.

Die Polyethercarbonatpolyole können in einem batch, semi-batch oder kontinuierlichen Verfahren hergestellt werden. Bevorzugt werden die Polyethercarbonatpolyole in einem kontinuierlichen Verfahren hergestellt, das sowohl eine kontinuierliche Copolymerisation als auch eine kontinuierliche Zugabe der H-funktionellen Startersubstanz umfasst. Gegenstand der Erfindung ist daher auch ein Verfahren, wobei H-funktionelle Startersubstanz, cyclisches Ethylencarbonat sowie Katalysator kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei der Katalysator in H-funktioneller Startersubstanz suspendiert kontinuierlich zugegeben.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des Katalysators oder der Reaktanden aufrechterhalten wird. Die Zufuhr des Katalysators und der Reaktanden kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die Katalysatorkonzentration während des Hauptteils des Verlaufs der kontinuierlichen Reaktion im Wesentlichen auf derselben Konzentration gehalten wird und dass Startersubstanz während des Hauptteils des Polymerisations-Verfahrens vorhanden ist. Eine inkrementelle Zugabe von Katalysator und/oder Reaktand, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

H-funktionelle Startersubstanz

Als geeignete H-funktionelle Startersubstanz ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen.

Für die Alkoxylierung aktive Gruppen mit aktiven H-Atomen sind beispielsweise -OH, -NH$_2$ (primäre Amine), -NH- (sekundäre Amine), -SH und -CO$_2$H, bevorzugt sind -OH, -NH$_2$ und -CO$_2$H, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten und Wasser, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanz können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Dodecanol, Tetradecanol, Hexadecanol, Octadecanol, Eicosanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als Carbonsäuren seien genannt: Ameisensäure, Essigsäure, Propionsäure, Buttersäure, Acrylsäure, Oxalsäure, Malonsäure, Bernsteinsäure, Glutarsäure, Adipinsäure, Pimelinsäure, aromatische Carbonsäuren wie Benzoesäure, Terephthalsäure, Tetrahydrophthalsäure, Phthalsäure oder Isophthalsäure, Fettsäuren wie Stearinsäure, Palmitinsäure, Ölsäure, Linolsäure oder Linolensäure.

Als H-funktionelle Startersubstanz geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Die H-funktionelle Startersubstanz kann auch aus der Substanzklasse der Polyetherpolyole ausgewählt sein, die ein Molekulargewicht $M_n$ im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionelle Startersubstanz kann auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.

Des Weiteren können als H-funktionelle Startersubstanz Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanz eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanz eingesetzten Polyethercarbonatpolyole werden hierzu in einem separaten Reaktionsschritt zuvor hergestellt.

Die H-funktionelle Startersubstanz weist im Allgemeinen eine Funktionalität (d.h. Anzahl an für die Polymerisation aktiven H-Atomen pro Molekül) von 1 bis 8, bevorzugt von 1 bis 3 auf. Die H-funktionelle Startersubstanz wird entweder einzeln oder als Gemisch aus mindestens zwei H-funktionellen Startersubstanzen eingesetzt.

Besonders bevorzugt handelt es sich bei der H-funktionellen Startersubstanz um mindestens eine Verbindungen ausgewählt aus der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht $M_n$ im Bereich von 150 bis 8000 g/mol bei einer Funktionalität von 2 bis 3 und Polyetherpolyole mit einem Molekulargewicht $M_n$ im Bereich von 150 bis 8000 g/mol und einer Funktionalität von 2 bis 3.

Katalysator

Erfindungsgemäß wird als Katalysator mindestens eine Verbindung gemäß einer der Formeln

$$X[VO_3] \qquad (1)$$

$$Y_2[WO_4] \qquad (2)$$

oder

$$Y_3[VO_4] \qquad (3)$$

mit X = Alkalimetall, bevorzugt Kalium oder Cäsium
Y = Kalium oder Cäsium

eingesetzt wird.

Als Kation X wird ein Alkalimetall eingesetzt, bevorzugt Kalium oder Cäsium, besonders bevorzugt Kalium. Als Kation Y wird in der Formel (2) und (3) Kalium oder Cäsium eingesetzt, bevorzugt Kalium. Bevorzugt wird als Katalysator eine Verbindung gemäß Formel (1) oder (3), besonders bevorzugt gemäß Formel (1) eingesetzt.

Die nach dem erfindungsgemäßen Verfahren erhaltenen Polyethercarbonatpolyole können beispielsweise durch Umsetzung mit Di- und/oder Polyisocyanaten zu Polyurethanen weiterverarbeitet werden.

Weitere Anwendungsmöglichkeiten sind in Wasch- und Reinigungsmittelformulierungen, wie beispielsweise für Textil- oder Oberflächenreinigung, Bohrflüssigkeiten, Kraftstoffadditiven, ionischen und nicht-ionischen Tensiden, Dispergiermittel, Schmiermitteln, Prozesschemikalien für die Papier- oder Textilherstellung, kosmetischen Formulierungen, wie beispielsweise in Haut- oder Sonnenschutzcreme oder Haarpflegeprodukten, zu finden.

In einer ersten Ausführungsform betrifft die Erfindung ein Verfahren zur Herstellung von Polyethercarbonatpolyolen durch Anlagerung von cyclischen Ethylencarbonat an eine H-funktionelle Startersubstanz in Anwesenheit eines Katalysators, dadurch gekennzeichnet, dass
als Katalysator mindestens eine Verbindung gemäß einer der Formeln

$$X[VO_3] \qquad (1)$$

$$Y_2[WO_4] \qquad (2)$$

oder

$$Y_3[VO_4] \qquad (3)$$

mit X = Alkalimetall, bevorzugt Kalium oder Cäsium
Y = Kalium oder Cäsium

eingesetzt wird.

In einer zweiten Ausführungsform betrifft die Erfindung ein Verfahren gemäß der ersten Ausführungsform, dadurch gekennzeichnet, dass als Katalysator mindestens eine Verbindung gemäß Formel (1) eingesetzt wird.

In einer dritten Ausführungsform betrifft die Erfindung ein Verfahren gemäß der Ausführungsform 1, dadurch gekennzeichnet, dass als Katalysator mindestens eine Verbindung ausgewählt aus der Gruppe bestehend aus $KVO_3$, $CsVO_3$, $K_3VO_4$, $Cs_3VO_4$, $K_2WO_4$ und $Cs_2WO_4$ eingesetzt wird.

In einer vierten Ausführungsform betrifft die Erfindung ein Verfahren gemäß einem einer der Ausführungsformen 1 bis 3, dadurch gekennzeichnet, dass die Anlagerung des cyclischen Ethylencarbonats an eine H-funktionelle Startersubstanz bei einer Temperatur von 130°C bis 200°C, bevorzugt 140°C bis 190°C durchgeführt wird.

In einer fünften Ausführungsform betrifft die Erfindung ein Verfahren gemäß einer der Ausführungsformen 1 bis 4, dadurch gekennzeichnet, dass die H-funktionelle Startersubstanz ein zahlenmittleres Molekulargewicht bis 10.000 g/mol, bevorzugt bis 5.000 g/mol, besonders bevorzugt bis 2.500 g/mol aufweist.

In einer sechsten Ausführungsform betrifft die Erfindung ein Verfahren gemäß einer der Ausführungsformen 1 bis 5, dadurch gekennzeichnet, dass die H-funktionelle Startersubstanz ausgewählt ist aus mindestens einer Verbindung der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht $M_n$ im Bereich von 150 bis 8000 g/mol bei einer Funktionalität von 2 bis 3 und Polyetherpolyole mit einem Molekulargewicht $M_n$ im Bereich von 150 bis 8000 g/mol und einer Funktionalität von 2 bis 3.

In einer siebten Ausführungsform betrifft die Erfindung ein Verfahren gemäß einer der Ausführungsformen 1 bis 6, dadurch gekennzeichnet, dass der Katalysator in einem Anteil von 10 bis 50000 ppm, besonders bevorzugt 20 bis 30000 ppm und höchst bevorzugt 50 bis 20000 ppm vorliegt.

In einer achten Ausführungsform betrifft die Erfindung ein Verfahren gemäß einer der Ausführungsformen 1 bis 7, dadurch gekennzeichnet, dass das molare Verhältnis von H-funktioneller Startersubstanz zu cyclischen Ethylencarbonat im Bereich von mehr als 1: 1 bis 1: 20, besonders bevorzugt 1:2 bis 1:15, insbesondere bevorzugt 1:5 bis 1:10 liegt.

In einer neunten Ausführungsform betrifft die Erfindung ein Verfahren gemäß einer der Ausführungsformen 1 bis 8, dadurch gekennzeichnet, dass H-funktionelle Startersubstanz, cyclisches Ethylencarbonat und Katalysator kontinuierlich in den Reaktor zudosiert wird.

In einer zehnten Ausführungsform betrifft die Erfindung ein Verfahren gemäß der neunten Ausführungsform, dadurch gekennzeichnet, dass das resultierende Produkt kontinuierlich aus dem Reaktor abgeführt wird.

In einer elften Ausführungsform betrifft die Erfindung ein Verfahren gemäß einer der Ausführungsformen 1 bis 10, dadurch gekennzeichnet, dass ein weiteres cyclisches Carbonat in einem Anteil von höchstens 20 Gew.-%, bezogen auf die Summe des Gesamtgewichts an eingesetztem cyclischen Carbonat, eingesetzt wird.

In einer zwölften Ausführungsform betrifft die Erfindung ein Verfahren gemäß einer der Ausführungsformen 1 bis 10, dadurch gekennzeichnet, dass kein weiteres cyclisches Carbonat eingesetzt wird.

In einer dreizehnten Ausführungsform betrifft die Erfindung ein Polyethercarbonatpolyol erhalten durch ein Verfahren gemäß einer der Ausführungsformen 1 bis 12.

In einer vierzehnten Ausführungsform betrifft die Erfindung die Verwendung des Polyethercarbonatpolyols gemäß der dreizehnten Ausführungsform in Wasch- und Reinigungsmittelformulierungen, wie beispielsweise für Textil- oder Oberflächenreinigung, Bohrflüssigkeiten, Kraftstoffadditiven, ionischen und nicht-ionischen Tensiden, Dispergiermittel, Schmiermitteln, Prozesschemikalien für die Papier- oder Textilherstellung, kosmetischen Formulierungen, wie beispielsweise in Haut- oder Sonnenschutzcreme oder Haarpflegeprodukten, oder für die Herstellung von Polyurethanen, z.B. Polyurethan-Weichschaumstoffen.

**Experimenteller Teil**

Experimentell ermittelte OH-Zahlen wurden gemäß der Vorschrift DIN 53240-2 (November 2007) bestimmt.

GPC Messungen wurden bei 40 °C in Tetrahydrofuran (THF, Flussrate: 1,0 mL/min) gemäß DIN 55672-1. Das Säulenset setzte sich aus den folgenden fünf Säulen zusammen: PSS, 5 μL, 8x50 mL Vorsäule, 2 PSS SVD, 5 μL, 100 Å, 8x300mm, 2 PSS SVD, 5 μL, 1000 Å, 8x300mm)). Proben (Konzentration 2-3 g L-1, Injektionsvolumen 100 μL) wurden mit einem Agilent technologies 1100 injiziert. Ein RID Detektor der Agilent 1200 Serie wurde verwendet um die Konzentration der Stoffe am Ende der Säulen zu detektieren. Die Rohdateien wurden mit einem PSS WinGPC Unity Software Paket prozessiert. Polystyrol mit einem bekannten Molekulargewicht wurde verwendet um die GPC zu kalibrieren und die Molmassenverteilung zu referenzieren (PSS ReadyCal Kit in einem Bereich von 266 Da bis 66.000 Da wurde verwendet). Das zahlengemittelte Molekulargewicht wurde mittels GPC bestimmt und wird als $M_n$ in den Beispielen angegeben.

Der Anteil an eingebautem $CO_2$ im resultierenden Polyetherpolycarbonatpolyol ($CO_2$-Gehalt) wurden mittels $^1$H-NMR Spektroskopie (Firma Bruker, AV III HD 600, 600 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR Spektrum

(bezogen auf TMS = 0 ppm) sind wie folgt:
Für verbleibendes monomeres Ethylencarbonat (Signal bei 4,53 ppm) Resultierend aus im Polyetherpolycarbonatpolyol eingebautem Kohlendioxid (Resonanzen bei 4,37-3,21 und ggf. 4,19-4,07 ppm - abhängig vom gewählten Startermolekül), Polyetherpolyol (d.h. ohne eingebautem Kohlendioxid) mit Resonanzen bei 3,80-3,55 ppm.

Der Molenanteil des im Polymer eingebauten Carbonats in der Reaktionsmischung wird nach Formel (I) wie folgt berechnet, wobei folgende Abkürzungen verwendet werden:

F(4,53) = Fläche der Resonanz bei 4,53 ppm für cyclisches Carbonat (entspricht vier Protonen)

F(4,37-4,21) = Fläche der Resonanz bei 4,37-4,21 ppm für Polyetherpolycarbonatpolyol.

F(4,19-4,07) = Fläche der Resonanz bei 4,19-4,07 ppm for Polyetherpolycarbonatpolyol (Die Summe von F (4,37-4,21) und F(4,19-4,07) entspricht 4 Protonen)

F(3,8-3,55) = Fläche der Resonanz bei 3,8-3,55 ppm für Polyetherpolyol (entspricht 4 Protonen)

Der Gewichtsanteil (in Gew.-%) polymer-gebundenen Carbonats (LC') in der Reaktionsmischung wurde nach Formel (I) berechnet,

$$LC_{gew.\%} = \frac{[F(4,37\text{-}4,21)+F(4,19\text{-}4,07)]\cdot 88}{N} \cdot 100\ \% \qquad (I)$$

wobei sich der Wert für $N$ ("Nenner" $N$) nach Formel (II) berechnet:

$$N = \left[ (4,37\text{-}4,21) + F(4,19\text{-}4,07) \right] \cdot 88 + F(3,8-3,55) \cdot 44 \qquad (II)$$

Der Faktor 88 resultiert aus der Summe der Molmassen von $CO_2$ (Molmasse 44 g/mol) und der von Ethylenoxid (Molmasse 44 g/mol), der Faktor 44 resultiert aus der Molmasse von Ethylenoxid.
Der Gewichtsanteil (in Gew.-%) an $CO_2$ im Polyetherpolycarbonatpolyol wurde nach Formel (III) berechnet:

$$CO_{2\,gew.\%} = LC_{gew.\%} \cdot \frac{44}{88} \qquad (III)$$

Um aus den Werten der Zusammensetzung der Reaktionsmischung die Zusammensetzung bezogen auf den Polymer-Anteil (bestehend aus Polyetherpolycarbonatpolyol, aufgebaut aus Starter, cyclischem Ethylencarbonat), wurden die Nicht-Polymer-Bestandteile der Reaktionsmischung (d.h. nicht umgesetztes cyclisches Ethylencarbonat) rechnerisch eliminiert. Der Gewichtsanteil der Carbonat-Wiederholungseinheiten im Polyetherpolycarbonatpolyol wurde in einen Gewichtsanteil Kohlendioxid mittels des Faktors F=44/(44+44) umgerechnet (Siehe Formel III). Die Angabe des $CO_2$-Gehalts im Polyetherpolycarbonatpolyol ("eingebautes $CO_2$"; siehe nachfolgende Beispiele) ist normiert auf das Polyetherpolycarbonatpolyol-Molekül, das bei der ringöffnenden Polymerisation entstanden ist.

Eingesetzte Rohstoffe:

Alle aufgezählten Chemikalien wurden vom genannten Hersteller in der angegebenen Reinheit erworben und ohne weitere Behandlung für die Synthese von Polyethercarbonatpolyolen verwendet.

| | |
|---|---|
| Natriumorthovanadat ($Na_3VO_4$): | Sigma-Aldrich 99,98 % |
| Kaliumorthovanadat ($K_3VO_4$): | ABCR 99,9 % |
| Cäsiumorthovanadat ($Cs_3VO_4$): | ABCR 99,9 % |
| Kaliummetavanadat ($KVO_3$): | Sigma-Aldrich 98 % |
| Cäsiummetavanadat ($CsVO_3$): | Sigma-Aldrich >99,9 % |
| Cyclisches Ethylencarbonat (cEC): | Sigma-Aldrich 99 % |
| 1,6-Hexandiol: | Sigma-Aldrich 99 % |

**Beispiel 1: Darstellung von Polyethercarbonatpolyolen durch ringöffnende Polymerisation von cyclischem Ethylencarbonat in Gegenwart von 1,6-Hexandiol als Starter und Na₃VO₄ als Katalysator**

Ein 500 mL Vierhalsglaskolben wurde mit Rückflusskühler, KPG-Rührer, Thermofühler, Stickstoffzuleitung und Gasaustritt/Gasabfuhr mit Überdruckventil ausgestattet. Anschließend wurden 200 g cyclisches Ethylencarbonat, 37,9 g 1,6-Hexandiol und 2,1 g Na₃VO₄ eingewogen. Für 30 Minuten wurde 10 L/h Stickstoff eingeleitet wobei die Suspension dabei mit 300 U/min gerührt wurde. Im Anschluss wurde die Suspension stufenweise auf 180°C aufgeheizt. Der entstehende Gasstrom wurde nach dem Rückflusskühler durch einen Blasenzähler abgelassen.

Die Reaktionsmischung wurde so lange bei der eingestellten Temperatur gehalten, bis die Gasentwicklung zum Erliegen kommt.

Der im Polyetherpolycarbonatpolyol eingebaute $CO_2$-Anteil wurde nach den zuvor beschriebenen Methoden mittels $^1$H-NMR Spektroskopie ermittelt. Das Molekulargewicht wurde mittels Gelpermeationschromatographie bestimmt.

Die Eigenschaften des resultierenden Polyethercarbonatpolyols sind in Tabelle 1 dargestellt.

**Beispiel 2: Darstellung von Polyethercarbonatpolyolen durch ringöffnende Polymerisation von cyclischem Ethylencarbonat in Gegenwart von 1,6-Hexandiol als Starter und K₃VO₄ als Katalysator**

Die Reaktion wurde analog zu Beispiel 1 durchgeführt, wobei 2,6 g K₃VO₄ an Stelle von Na₃VO₄ als Katalysator eingesetzt wurden.

Die Eigenschaften des resultierenden Polyethercarbonatpolyols sind in Tabelle 1 dargestellt.

**Beispiel 3: Darstellung von Polyethercarbonatpolyolen durch ringöffnende Polymerisation von cyclischem Ethylencarbonat in Gegenwart von 1,6-Hexandiol als Starter und Cs₃VO₄ als Katalysator**

Die Reaktion wurde analog zu Beispiel 1 durchgeführt, wobei 5,8 g Cs₃VO₄ an Stelle von Na₃VO₄ als Katalysator eingesetzt wurden.

Die Eigenschaften des resultierenden Polyethercarbonatpolyols sind in Tabelle 1 dargestellt.

**Beispiel 4: Darstellung von Polyethercarbonatpolyolen durch ringöffnende Polymerisation von cyclischem Ethylencarbonat in Gegenwart von 1,6-Hexandiol als Starter und KVO₃ als Katalysator**

Die Reaktion wurde analog zu Beispiel 1 durchgeführt, wobei 1,6 g KVO₃ an Stelle von Na₃VO₄ als Katalysator eingesetzt wurden.

Die Eigenschaften des resultierenden Polyethercarbonatpolyols sind in Tabelle 1 dargestellt.

**Beispiel 5: Darstellung von Polyethercarbonatpolyolen durch ringöffnende Polymerisation von cyclischem Ethylencarbonat in Gegenwart von 1,6-Hexandiol als Starter und CsVO₃ als Katalysator**

Die Reaktion wurde analog zu Beispiel 1 durchgeführt, wobei 2,6 g CsVO₃ an Stelle von Na₃VO₄ als Katalysator eingesetzt wurden.

Die Eigenschaften des resultierenden Polyethercarbonatpolyols sind in Tabelle 1 dargestellt.

**Tabelle 1:**

| Beispiel | Katalysator | $CO_2$ [Gew.%] | Molekulargewicht $M_n$ [g/mol] |
|---|---|---|---|
| 1* | Na₃VO₄ | 25 | 591 |
| 2 | K₃VO₄ | 27 | 639 |
| 3 | Cs₃VO₄ | 27 | 574 |
| 4 | KVO₃ | 27 | 697 |
| 5 | CsVO₃ | 27 | 685 |
| * Vergleichsbeispiel | | | |

Wie in Tabelle 1 zu erkennen, führen die in den Beispielen 1 bis 5 eingesetzten Katalysatoren zur Anlagerung von cyclischem Ethylencarbonat an eine H-funktionelle Startersubstanz. Die erfindungsgemäßen Katalysatoren führen zu einem erhöhten Einbau von $CO_2$-Gruppen in die Polyethercarbonatpolyole der Beispiele 2 bis 5 im Gegensatz zu Beispiel 1.

In einer besonderen Ausführungsform der Erfindung wird ein Katalysator gemäß Formel (1) eingesetzt. In dieser Ausführungsform weisen die erfindungsgemäßen Katalysatoren zusätzlich eine erhöhte katalytische Aktivität auf, welche zu einer Erhöhung des Molekulargewichts der erhaltenen Polyethercarbonatpolyole der Beispiele 4 und 5 im Vergleich zu den Beispielen 2 und 3 führt.

**Patentansprüche**

1. Verfahren zur Herstellung von Polyethercarbonatpolyolen durch Anlagerung von cyclischen Ethylencarbonat an eine H-funktionelle Startersubstanz in Anwesenheit eines Katalysators, **dadurch gekennzeichnet, dass** als Katalysator mindestens eine Verbindung gemäß einer der Formeln

$$X[VO_3] \qquad\qquad (1)$$

$$Y_2[WO_4] \qquad\qquad (2)$$

oder

$$Y_3[VO_4] \qquad\qquad (3)$$

mit X = Alkalimetall, bevorzugt Kalium oder Cäsium
Y = Kalium oder Cäsium

eingesetzt wird.

2. Verfahren gemäß Anspruch 1, **dadurch gekennzeichnet, dass** als Katalysator mindestens eine Verbindung gemäß Formel (1) eingesetzt wird.

3. Verfahren gemäß Anspruch 1, **dadurch gekennzeichnet, dass** als Katalysator mindestens eine Verbindung ausgewählt aus der Gruppe bestehend aus $KVO_3$, $CsVO_3$, $K_3VO_4$, $Cs_3VO_4$, $K_2WO_4$ und $Cs_2WO_4$ eingesetzt wird.

4. Verfahren gemäß einem der Ansprüche 1 bis 3, **dadurch gekennzeichnet, dass** die Anlagerung des cyclischen Ethylencarbonats an eine H-funktionelle Startersubstanz bei einer Temperatur von 130°C bis 200°C, bevorzugt 140°C bis 190°C durchgeführt wird.

5. Verfahren gemäß einem der Ansprüche 1 bis 4, **dadurch gekennzeichnet, dass** die H-funktionelle Startersubstanz ein zahlenmittleres Molekulargewicht bis 10.000 g/mol, bevorzugt bis 5.000 g/mol, besonders bevorzugt bis 2.500 g/mol aufweist.

6. Verfahren gemäß einem der Ansprüche 1 bis 5, **dadurch gekennzeichnet, dass** die H-funktionelle Startersubstanz ausgewählt ist aus mindestens einer Verbindung der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht $M_n$ im Bereich von 150 bis 8000 g/mol bei einer Funktionalität von 2 bis 3 und Polyetherpolyole mit einem Molekulargewicht $M_n$ im Bereich von 150 bis 8000 g/mol und einer Funktionalität von 2 bis 3.

7. Verfahren gemäß einem der Ansprüche 1 bis 6, **dadurch gekennzeichnet, dass** der Katalysator in einem Anteil von 10 bis 50000 ppm, besonders bevorzugt 20 bis 30000 ppm und höchst bevorzugt 50 bis 20000 ppm vorliegt.

8. Verfahren gemäß einem der Ansprüche 1 bis 7, **dadurch gekennzeichnet, dass** das molare Verhältnis von H-funktioneller Startersubstanz zu cyclischen Ethylencarbonat im Bereich von mehr als 1: 1 bis 1: 20, besonders bevorzugt 1:2 bis 1:15, insbesondere bevorzugt 1:5 bis 1:10 liegt.

9. Verfahren gemäß einem der Ansprüche 1 bis 8, **dadurch gekennzeichnet, dass** H-funktionelle Startersubstanz, cyclisches Ethylencarbonat und Katalysator kontinuierlich in den Reaktor zudosiert wird.

10. Verfahren gemäß Anspruch 9, **dadurch gekennzeichnet, dass** das resultierende Produkt kontinuierlich aus dem Reaktor abgeführt wird.

11. Verfahren gemäß einem der Ansprüche 1 bis 10, **dadurch gekennzeichnet, dass** ein weiteres cyclisches Carbonat in einem Anteil von höchstens 20 Gew.-%, bezogen auf die Summe des Gesamtgewichts an eingesetztem cyclischen Carbonat, eingesetzt wird.

12. Verfahren gemäß einem der Ansprüche 1 bis 10, **dadurch gekennzeichnet, dass** kein weiteres cyclisches Carbonat eingesetzt wird.

13. Polyethercarbonatpolyol erhalten durch ein Verfahren gemäß einem der Ansprüche 1 bis 12.

14. Verwendung des Polyethercarbonatpolyols gemäß Anspruch 13 in Wasch- und Reinigungsmittelformulierungen, Bohrflüssigkeiten, Kraftstoffadditiven, ionischen und nicht-ionischen Tensiden, Dispergiermittel, Schmiermitteln, Prozesschemikalien für die Papier- oder Textilherstellung, kosmetischen Formulierungen oder für die Herstellung von Polyurethanen.

Europäisches
Patentamt

European
Patent Office

Office européen
des brevets

**EUROPÄISCHER RECHERCHENBERICHT**

Nummer der Anmeldung

EP 19 19 2409

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | ROBERT F. HARRIS: "Structural features of poly(alkylene ether carbonate) diol oligomers by capillary gas chromatography", JOURNAL OF APPLIED POLYMER SCIENCE, Bd. 37, Nr. 1, 5. Januar 1989 (1989-01-05), Seiten 183-200, XP055622074, US ISSN: 0021-8995, DOI: 10.1002/app.1989.070370114 | 13,14 | INV. C08G64/30 C08G18/44 ADD. C08G65/26 |
| A | * das ganze Dokument * | 1-12 | |
| | ----- | | |
| A | WO 2008/092767 A1 (BASF SE [DE]; MIJOLOVIC DARIJO [DE] ET AL.) 7. August 2008 (2008-08-07) * Seite 1, Zeile 17 - Zeile 20 * * Seite 4, Zeile 4 - Zeile 16 * * Anspruch 1 * | 1-14 | |
| | ----- | | |
| X | WO 2014/042391 A1 (SK INNOVATION CO LTD [KR]; SK GLOBAL CHEMICAL CO LTD [KR]) 20. März 2014 (2014-03-20) | 13,14 | RECHERCHIERTE SACHGEBIETE (IPC) |
| A | * Beispiele * | 1-12 | C08G |
| | ----- | | |

Der vorliegende Recherchenbericht wurde für alle Patentansprüche erstellt

| Recherchenort | Abschlußdatum der Recherche | Prüfer |
|---|---|---|
| Den Haag | 17. September 2019 | Hoffmann, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 19 19 2409

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-09-2019

| Im Recherchenbericht angeführtes Patentdokument | Datum der Veröffentlichung | Mitglied(er) der Patentfamilie | Datum der Veröffentlichung |
|---|---|---|---|
| WO 2008092767 A1 | 07-08-2008 | AT 493457 T | 15-01-2011 |
| | | CN 101611074 A | 23-12-2009 |
| | | EP 2115032 A1 | 11-11-2009 |
| | | ES 2358861 T3 | 16-05-2011 |
| | | JP 5512283 B2 | 04-06-2014 |
| | | JP 2010516796 A | 20-05-2010 |
| | | KR 20090107555 A | 13-10-2009 |
| | | PT 2115032 E | 01-02-2011 |
| | | US 2010048935 A1 | 25-02-2010 |
| | | WO 2008092767 A1 | 07-08-2008 |
| WO 2014042391 A1 | 20-03-2014 | KR 20140034477 A | 20-03-2014 |
| | | TW 201414766 A | 16-04-2014 |
| | | WO 2014042391 A1 | 20-03-2014 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0343572 A
- DE 2523352
- DE 1495299 A1
- EP 1359177 A

### In der Beschreibung aufgeführte Nicht-Patentliteratur

- **R.F. HARRIS.** *Journal of Applied Polymer Science,* 1989, vol. 37, 183-200